# EUROPÄISCHE PATENTSCHRIFT

(11) **EP 0 523 053 B1**
(45) Veröffentlichungstag und Bekanntmachung des Hinweises auf die Patenterteilung: **27.04.1994**
(21) Anmeldenummer: 91903345.6
(22) Anmeldetag: 02.02.1991
(51) Int. Cl.: B60R 22/26

(54) **SICHERHEITSEINRICHTUNG FÜR KRAFTFAHRZEUGE**
SAFETY DEVICE FOR MOTOR VEHICLES
DISPOSITF DE SECURITE POUR VEHICULES A MOTEUR

(30) Priorität: 31.03.1990 DE 4010452
(43) Veröffentlichungstag der Anmeldung: 20.01.1993
(73) Patentinhaber: AUDI AG, 85045 Ingolstadt (DE)
(72) Erfinder: KREBS, Bernd, D-8071 Wettstetten (DE)
(74) Vertreter: Engelhardt, Harald
(86) Internationale Anmeldenummer: EP9100195
(87) Internationale Veröffentlichungsnummer: WO9115383

(56) Entgegenhaltungen:
- DE-A- 2 810 577
- DE-A- 3 021 126
- DE-A- 3 427 466

## Beschreibung

Die Erfindung bezieht sich auf eine Sicherheitseinrichtung für Kraftfahrzeuge gemäß dem Oberbegriff des Patentanspruchs 1.

Die Erfindung geht aus von einer im Personenkraftwagenbau allgemein üblichen Anordnung mit einem Sitz, einer dem Sitz zugeordneten, höhenverstellbaren Kopfstütze und einem Sicherheitsgurt, welcher von einem oberen Umlenk- oder Anlenkpunkt schräg nach unten auf die Vorderseite der Sitzlehne geführt ist. Bei einer derartigen Anordnung läßt sich die Kopfstütze von Hand oder elektromotorisch in die gewünschte Höhenposition bewegen. Da sich gezeigt hat, daß die meisten Sitzbenutzer die Kopfstütze nicht korrekt in der Höhe einstellen und somit bei einem Aufprall einer höheren Verletzungsgefahr ausgesetzt sind, hat man auch schon eine automatische Höhenverstellung vorgeschlagen. Die Höhenverstellung erfolgt dabei meist in Abhängigkeit von der Sitzposition. Man geht dabei davon aus, daß größere Personen, welche dementsprechend auch eine höhere Anordnung der Kopfstütze benötigen, den Sitz weiter nach hinten verschieben. Eine Einrichtung zum selbsttätigen Einstellen der Höhenposition der Kopfstütze ist sehr aufwendig und hat sich deshalb in der Praxis nicht durchgesetzt.

Der Erfindung liegt die Aufgabe zugrunde, eine Höhenverstellvorrichtung für die Kopfstütze anzugeben, welche mit baulich besonders einfachen Mitteln realisierbar ist.

Die Aufgabe wird durch die kennzeichnenden Merkmale des Patentanspruchs 1 gelöst.

Die bei einem Frontaufprall selbsttätig wirkende Höhenverstellvorrichtung für die Kopfstütze umfaßt nur eine an der Kopfstütze ausgebildete Anschlagfläche für den Sicherheitsgurt. Über die Anschlagfläche wird bei belastetem Sicherheitsgurt (Aufprall) die Kopfstütze in die optimale Höhenposition verschoben. Die Kopfstütze wird dabei soweit nach oben verschoben, bis das Gurtband eine vom oberen Umlenkpunkt über die Anschlagfläche zur Schulter des Gurtbenutzers reichende gerade Linie bildet.

An welcher Stelle der Kopfstütze die Anschlagfläche ausgebildet werden muß, ist von der jeweiligen Zuordnung der einzelnen Bauteile, insbesondere der Lage des oberen Umlenkpunktes, abhängig. Es ist nicht schwer, bei den konstruktiven Gegebenheiten und Kenntnis der optimalen Höhenposition der Kopfstütze die Lage der Anschlagfläche festzulegen. Durch die vorgeschlagene Sicherheitseinrichtung läßt sich also mit einfachen Mitteln erreichen, daß bei einem Frontaufprall der Kopf des angegurteten Insassen auf eine optimal in der Höhe eingestellte Kopfstütze auftrifft, wenn er in der zweiten Bewegungsphase nach hinten geschleudert wird.

Die Anschlagfläche kann durch die Kopfstütze selbst, durch einen nach außen vorstehenden Ansatz oder einen Winkel gebildet sein, wobei letzterer verhindert, daß das Gurtband von der Anschlagfläche abgleiten kann. Besonders vorteilhaft ist jedoch, wenn die Anschlagfläche Teil einer an der Kopfstütze angeordneten Öse ist. Die Öse stellt sicher, daß das Gurtband auf jeden Fall mit der Kopfstütze in Wirkverbindung steht. Ein Abgleiten oder unbeabsichtigtes Wegschieben des Sicherheitsgurtes von der Anschlagfläche ist damit zuverlässig ausgeschlossen.

Gemäß einer vorteilhaften Ausgestaltung der Erfindung kann die Anschlagfläche/Öse in der Höhe einstellbar ausgebildet sein. Durch die Einstellung ist es möglich, eine individuelle Anpaßung an die Größe des Sitzbenutzers vorzunehmen.

Besonders vorteilhaft ist jedoch, wenn die erfindungsgemäße Sicherheitseinrichtung mit einem in an sich bekannter Weise höhenverstellbaren oberen Umlenk- oder Anlenkpunkt für den Sicherheitsgurt kombiniert wird. Dadurch ist sichergestellt, daß - in Abhängigkeit von der gewählten Höheneinstellung des Umlenkbeschlages - bei einem Aufprall auch die Kopfstütze in die entsprechende Höhenposition verschoben wird. Ein separates Einstellten der Anschlagfläche/Öse kann dadurch entfallen.

Wenn ein sich selbsttätig einstellender oberer Umlenkbeschlag vorhanden ist, dann wird auch darüber bei einem Aufprall die Kopfstütze selbsttätig in die optimale Höhenposition verschoben, ohne daß dafür ein großer Bauaufwand für eine Mechanik oder einen elektrischen Antrieb notwendig wäre.

Ein Ausführungsbeispiel der Erfindung ist in der Zeichnung dargestellt und wird nachfolgend näher beschrieben. Es zeigt
- Fig. 1: eine Sicherheitseinrichtung mit einem Sitz, einer an dem Sitz angeordneten, höhenverstellbaren Kopfstütze und einem über einen oberen Umlenkbeschlag geführten Gurtband,
- Fig. 2: die Kopfstütze aus Fig. 1 von vorne gesehen und
- Fig. 3: die Anordnung aus Fig. 1, wenn der Sicherheitsgurt bei einem Frontaufprall belastet wird.

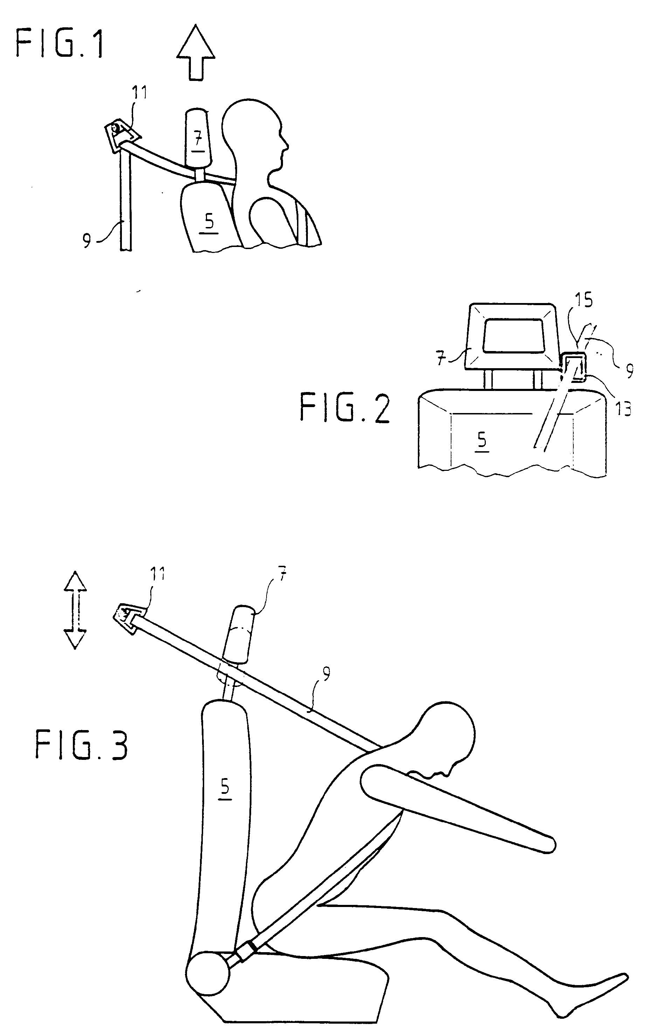

Fig. 1 zeigt den oberen Abschnitt eines Sitzes 5 für einen Personenkraftwagen. Der Sitz 5 nimmt eine Kopfstütze 7 auf, welche in an sich bekannter und deshalb nicht dargestellter Weise in der Höhe einstellbar ist.

Zur Sicherung einer auf dem Sitz 5 untergebrachten Person ist ein Sicherheitsgurt 9 vorgesehen, welcher von einem Aufwickelautomaten (nicht dargestellt) zu einem oberen Umlenkbeschlag 11 geführt ist. Über den schwenkbar ausgebildeten Umlenkbeschlag 11 verläuft das Gurtband schräg nach unten an der Kopfstütze 7 vorbei auf die Vorderseite des Sitzes 5 und von dort diagonal über den Oberkörper des mit dem Sicherheitsgurt 9 gesicherten Insassen.

Wie Fig. 2 zeigt, weist die Kopfstütze 7 eine fest mit dem Rahmen der Kopfstütze 7 verbundene Öse 13 auf, durch welche der Sicherheitsgurt 9 hindurchgeführt ist.

Die Situation bei einem Frontaufprall zeigt Fig. 3. Der angeschnallte Insasse wird dabei nach vorne geschleudert, wodurch sich der in der Ausgangslage nahe dem Sitz 5 befindliche Sicherheitsgurt 9 nach oben spannt. Da er jedoch über die Öse 13 an der Kopfstütze 7 geführt ist, zieht er die Kopfstütze 7 nach oben. Dabei drückt der Sicherheitsgurt 9 gegen die Anschlagfläche 15 der Öse 13, so daß der Sicherheitsgurt 9 eine von dem oberen Umlenkbeschlag 11 über die Anschlagfläche 15 zur Schulter des Gurtbenutzers reichende gerade Linie bildet.

Die Ausgangsposition der Kopfstütze 7 ist in Fig. 3 strichpunktiert dargestellt, während die ausgezogene Linie die Kopfstütze 7 beim Aufprall zeigt. Diese Stellung bildet einen optimalen Schutz für den Kopf des Insassen, wenn dieser in der zweiten Bewegungsphase nach hinten geschleudert wird.

Der obere Umlenkbeschlag 11 ist in der Höhe einstellbar, wobei die Einstellung von Hand oder automatisch erfolgen kann. Die gewählte Einstellung ist mitbestimmend für den Betrag, um welchen die Kopfstütze 7 bei einem Aufprall nach oben verschoben wird. Wie anhand der Zeichnung ohne weiteres nachvollziehbar, wird die Kopfstütze 7 dann, wenn sich der obere Umlenkbeschlag 11 in einer unteren Position befindet, durch den Sicherheitsgurt 9 weniger weit herausgezogen. Diese Zuordnung stellt sicher, daß für eine kleinere Person, welche dementsprechend auch eine untere Position des Umlenkbeschlages 11 wählt, bei einem Aufprall eine angepaßt niedrigere Position der Kopfstütze 7 zur Verfügung steht.

## Patentansprüche

1. Sicherheitseinrichtung für Kraftfahrzeuge, umfassend einen Sitz, eine dem Sitz zugeordnete, höhenverstellbare Kopfstütze und einen Sicherheitsgurt, welcher von einem oberen Umlenk- oder Anlenkpunkt schräg nach unten auf die Vorderseite der Sitzlehne geführt ist, dadurch gekennzeichnet, daß an der Kopfstütze (7) eine Anschlagfläche (15) für den Sicherheitsgurt (9) ausgebildet ist, derart, daß der belastete Sicherheitsgurt (9) über die Anschlagfläche (15) eine zu tief angeordnete Kopfstütze (7) nach oben verschiebt bis der Sicherheitsgurt (9) eine vom oberen Umlenkpunkt (Umlenkbeschlag 11) über die Anschlagfläche (15) zur Schulter des Gurtbenutzers reichende gerade Linie bildet.

2. Sicherheitseinrichtung nach Anspruch 1, dadurch gekennzeichnet, daß die Anschlagfläche (15) Teil einer an der Kopfstütze (7) angeordneten Öse (13) ist.

3. Sicherheitseinrichtung nach Anspruch 1 oder 2, dadurch gekennzeichnet, daß die Anschlagfläche/Öse (13) in der Höhe einstellbar ist.

4. Sicherheitseinrichtung nach Anspruch 1 oder 2, dadurch gekennzeichnet, daß der obere Umlenk- oder Anlenkpunkt für den Sicherheitsgurt (9) in an sich bekannter Weise höhenverstellbar ausgebildet ist.

## Claims

1. The invention relates to a safety device for motor vehicles, comprising a seat, a height-adjustable headrest assigned to the seat and a safety belt which is guided from an upper deflection or attachment point obliquely downwards onto the front side of the seat back, characterized in that on the headrest (7) there is configured a stop face (15) for the safety belt (9), such that the strained safety belt (9), by virtue of the stop face (15), displaces a too low positioned headrest (7) upwards until the safety belt (9) forms a straight line reaching from the upper deflection point (deflection fitting 11), via the stop face (15), to the belt user' shoulder.

2. Safety device according to Claim 1, characterized in that the stop face (15) is part of an eyelet (13) disposed on the headrest (7).

3. Safety device according to Claim 1 or 2, characterized in that the stop face/eyelet (13) is adjustable in height.

4. Safety device according to Claim 1 or 2, characterized in that the upper deflection or attachment point for the safety belt (9) is configured such that it can be adjusted in height in a manner which is known per se.

## Revendications

1. Dispositif de sécurité pour véhicules automobiles, comprenant un siège, un appuie-tête réglable en hauteur, adjoint au siège, et une ceinture de sécurité qui, à partir d'un point supérieur de renvoi ou d'articulation, s'étend obliquement vers le bas vers le côté avant du dossier de siège, caractérisé en ce qu'une surface d'arrêt (15) pour la ceinture de sécurité (9) est formée sur l'appuie-tête (7), de telle sorte que, lorsqu'elle est sollicitée, la ceinture de sécurité (9) déplace vers le haut, par l'intermédiaire de la surface d'arrêt (15), un appuie-tête (7) qui est placé dans une position trop basse, jusqu'à ce que la ceinture de sécurité (9) forme une ligne droite entre le point de renvoi supérieur (pièce de renvoi 11) et l'épaule de l'utilisateur de la ceinture en passant sur la surface d'arrêt (15).

2. Dispositif de sécurité selon la revendication 1, caractérisé en ce que la surface d'arrêt (15) fait partie d'un anneau (13) fixé à l'appuie-tête (7).

3. Dispositif de sécurité selon la revendication 1 ou 2, caractérisé en ce que la surface d'attaque/anneau (13) est réglable en hauteur.

4. Dispositif de sécurité selon la revendication 1 ou 2, caractérisé en ce que le point supérieur de renvoi ou d'articulation pour la ceinture de sécurité (9) est réalisé de façon connue en soi de manière à être réglable en hauteur.
